# NEUE EUROPÄISCHE PATENTSCHRIFT

(11) **EP 3 292 007 B2**
(45) Veröffentlichungstag und Bekanntmachung des Hinweises auf die Entscheidung über den Einspruch: **17.12.2025**
(45) Hinweis auf die Patenterteilung: 26.10.2022
(21) Anmeldenummer: 16721398.2
(22) Anmeldetag: 29.04.2016
(51) Int. Cl.: B60H 1/00, F41H 7/00, F41H 7/03

(54) **KÜHLSYSTEM EINES GEFECHTSFAHRZEUGS SOWIE DRUCKKASKADE ZUR KÜHLUNG VON MINDESTENS EINER ELEKTROIKEINHEIT IN EINEM GEFECHTSFAHRZEUG MITTELS EINES KÜHLSYSTEMS**
COOLING SYSTEM OF A COMBAT VEHICLE, AND PRESSURE CASCADE FOR COOLING AT LEAST ONE ELECTRONIC UNIT IN A COMBAT VEHICLE BY MEANS OF A COOLING SYSTEM
SYSTÈME DE REFROIDISSEMENT D'UN VÉHICULE DE COMBAT ET CASCADE DE PRESSION POUR LE REFROIDISSEMENT D'AU MOINS UNE UNITÉ ÉLECTRONIQUE DANS UN VÉHICULE DE COMBAT AU MOYEN D'UN SYSTÈME DE REFROIDISSEMENT

(30) Priorität: 07.05.2015 DE 202015102347 U
(43) Veröffentlichungstag der Anmeldung: 14.03.2018
(73) Patentinhaber: Rheinmetall Landsysteme GmbH, 29345 Unterlüß (DE)
(72) Erfinder: LANG, Gerhard, 24796 Groß Nordsee (DE); ECKHOFF, Detlev, 24238 Selent (DE); SCHWARTZ, Eckhard, 24631 Langwedel (DE)
(74) Vertreter: HKW Intellectual Property PartG mbB
(86) Internationale Anmeldenummer: PCT/EP2016/059694
(87) Internationale Veröffentlichungsnummer: WO 2016/177649

(56) Entgegenhaltungen:
- EP-A1- 0 637 728
- EP-A1- 2 106 939
- EP-A1- 2 145 786
- EP-A1- 2 613 118
- EP-A2- 0 878 687
- EP-A2- 1 060 917
- EP-A2- 2 042 814
- EP-B1- 0 673 330
- EP-B1- 0 878 687
- WO-A1-2012/076524
- WO-A2-2011/072673
- DE-A1- 10 160 935
- DE-A1- 10 254 112
- DE-A1- 102004 028 740
- DE-A1- 102008 017 521
- DE-A1- 102008 031 695
- DE-A1- 102008 055 849
- DE-A1- 102009 058 567
- DE-A1- 102010 013 313
- DE-A1- 102010 013 331
- DE-A1- 102012 021 445
- DE-A1- 102012 100 906
- DE-A1- 19 528 776
- DE-A1- 19 720 815
- DE-A1- 19 804 698
- DE-A1- 19 811 548
- DE-A1- 3 334 992
- DE-A1- 4 310 556
- DE-B3- 102005 049 313
- DE-B3- 102012 105 568
- DE-C- 171 272
- DE-C- 834 215
- DE-C- 977 753
- DE-C1- 4 136 207
- DE-C2- 4 445 298
- DE-T2- 69 707 663
- DE-U1- 202015 102 347
- DE-U1- 8 902 263
- FR-A- 828 457
- FR-A1- 2 990 503
- FR-A1- 2 992 913
- JP-A- 2010 166 865
- RU-C1- 2 465 537
- RU-C1- 2 468 329
- RU-C1- 2 498 197
- RU-C1- 2 528 512
- RU-C2- 2 346 223
- US-A- 2 434 752
- US-A- 903 660

## Beschreibung

Die vorliegende Erfindung beschreibt ein Kühlsystem in einem Gefechtsfahrzeug. Die zu kühlende Elektronik können dabei diverse Antriebs-, eine Steuer- und/oder Sensorelektroniken im Gefechtsfahrzeug sein. Das Kühlsystem selber dient der Klimatisierung verschiedener Zonen im Gefechtsfahrzeug, insbesondere von Arbeitsplätzen des Bedienpersonals.

Kühlsysteme dienen der Klimatisierung in einem Gefechtsfahrzeug. Da es aufgrund der Antriebe und Motoren in einem Gefechtsfahrzeug sehr warm werden kann, leidet die Konzentration und Bedienfähigkeit des Bedienpersonals unter der Wärme. Bei Sonneneinstrahlung auf das Gefechtsfahrzeug kann diese Wärmeentwicklung noch begünstigt werden. Dies trifft vor allem auf sonnenreiche Einsatzgebiete zu.

Um der Wärmeentwicklung entgegenzuwirken, sind Kühlsysteme erforderlich. Diese sollen zunächst dem Bedienpersonal im Gefechtsfahrzeug ein erträgliches Arbeitsklima ermöglichen. Im Sinne dieser Erfindung kann das Kühlsystem aber auch zum Kühlen von Elektronikeinheiten dienen.

Ein Kühlsystem für Gefechtsfahrzeuge ist beispielsweise aus der DE 34 45 336 C2 bekannt. Hierbei wird gekühlte Druckluft einer Kabine zugeführt. Die Kühlung geschieht über einen Verdichter und die Druckluft wird über Turbinen erzeugt.

Elektronikeinheiten werden in Gefechtsfahrzeugen benötigt, um elektrische Leistungseinheiten, wie Antriebe, zu steuern. Je nach Leistungsaufnahme der Leistungseinheiten, können dabei nicht unerhebliche Mengen an Wärme entstehen. Da diese entstehende Wärme als Verlustleistung den Wirkungsgraden der Elektronikeinheiten entgegensteht, gilt es bei Elektronikeinheiten die entstehende Wärme möglichst gut abzuleiten bzw. die entsprechende Elektronikeinheit zu kühlen. Die hier genannten Gefechtsfahrzeuge umfassen ebenfalls gepanzerte Gefechtsfahrzeuge.

Elektronikeinheiten, beispielsweise zur Ansteuerung der Antriebe in einem Gefechtsfahrzeug, werden üblicherweise in eigens dafür vorgesehenen Räumen im Gefechtsfahrzeug angeordnet, so dass ein Wärmeaustausch über die Luft durch den abgegrenzten Raum sich oftmals als schwierig erweist. Die produzierte Wärme, gerade bei den Elektronikeinheiten für die Antriebe, kann dabei so hoch sein, dass sie durch konventionelle Kühlung über Kühlrippen und/oder über Wärmeabgabe an das Chassis des Gefechtsfahrzeugs nur unzureichend abgeführt werden kann. Um den dadurch entstehenden Leistungsverlust gering zu halten, ist es nötig zusätzliche Kühlungen den Elektronikeinheiten zur Verfügung zu stellen.

Eine Kühlung für Elektronikeinheiten zeigt beispielsweise die DE 10 2012 100 906 A1. In dieser Offenlegungsschrift wird ein Kühlungssystem innerhalb eines Einbauraums für eine Elektronikeinheit beschrieben, in dem über ein Ventilator ein Luftstrom an den zu kühlenden Elektronikeinheiten vorbeigeleitet wird, damit die Wärme vom Luftstrom abgeleitet wird. Hierzu ist es jedoch notwendig eine entsprechende Kühleinheit mit Ventilator innerhalb des Einbauraums aufzubauen.

Eine weitere Kühlmöglichkeit ist in der DE 10 2010 013 331 A1 beschrieben. Es wird eine Kühlschlange in Wirkverbindung mit dem Einbauraum gebracht, durch die Kühlfluid geleitet wird. Durch diesen Aufbau wird der Einbauraum an sich von außen gekühlt und damit indirekt die innen liegenden zu kühlenden Elektronikeinheiten.

Ebenso beschreibt die DE 10 2008 055 849 B4 eine entsprechende Kühlung der Luft in einem Innenraum eines gepanzerten Fahrzeugs, wobei hier keine Elektronikeinheiten im Speziellen gekühlt werden, sondern generelle Innenräume in dem gepanzerten Fahrzeug. Somit ist die hier gezeigte Vorrichtung zur Kühlung entsprechend aufwändig gestaltet.

Das Dokument EP 0 878 687 A2 beschreibt einen Kampfpanzerraum mit einem Kühlaggregat und einem gekühlten Elektronikraum.

Der vorliegenden Erfindung liegt die Aufgabe zu Grunde, eine Kühlung der Luft in einem Gefechtsfahrzeug über ein Kühlsystem zu gewährleisten, wobei das Kühlsystem platzsparend angebracht sein soll.

Diese Aufgabe wird mit dem Kennzeichen des Anspruchs 1 gelöst. Es wird vorgeschlagen, in einem vorhandenen Raum eines Gefechtsturms eines Gefechtsfahrzeuges eine Kühlanlage vorzusehen, wobei die gekühlte Luft über ein Schlauchsystem zu den zu kühlenden Zonen im Gefechtsfahrzeug verteilt wird. Es wird weiterhin eine vorhandene Kühlanlage zur Kühlung von Elektronikeinheiten in einem Gefechtsfahrzeug genutzt. Die von der Kühlanlage erzeugte kalte und entfeuchtete Luft, welche über Schläuche im Gefechtsfahrzeug verteilt wird, wird ebenfalls über mindestens einen zusätzlichen Schlauch dem Einbauraum der Elektronikeinheiten zugefügt. Dadurch entsteht im Einbauraum ein Überdruck. Gleichzeitig wird über einen Durchbruch zur Kühlanlage die durch die Elektronikeinheit erwärmte Luft über den in der Kühlanlage vorherrschenden Unterdruck zur Kühlanlage abgesaugt.

Moderne Gefechtsfahrzeuge besitzen mindestens eine Kühlanlage, um vorrangig die Mannschaftsräume zu klimatisieren. Oftmals sind gleichzeitig Mittel zur Dekontamination vorgesehen, um die Luft gerade im Mannschaftsraum sauber und für den Menschen verträglich zu halten, beispielsweise gegen ABC-Kontaminierungen. Dies geschieht vorteilhafterweise durch Filter. Ein solcher ABC-Schutz wird beispielsweise in der DE 10 2008 017 521 A1 beschrieben.

Die von der Kühlanlage erzeugte kühle Luft wird über ein Schlauchsystem zu den benötigten Zonen im Gefechtsfahrzeug transportiert. Vor Ort, im zu kühlenden Raum des Gefechtsfahrzeugs, sind oftmals Mittel zur Regelung der gekühlten Luft vorgesehen. So ist es möglich, die Zufuhr der gekühlten Luft beispielsweise im Mannschaftsraum durch ein Ventil oder eine Klappe zu regeln.

Das Schlauchsystem des Kühlsystems verläuft von der Kühlanlage zu den zu kühlenden Zonen im Gefechtsfahrzeug. Da die Kühlanlage in einem Gefechtsturm eingebracht ist, verlaufen auch die Schläuche im Gefechtsturm, um die Bewegungsfreiheit des Gefechtsturms nicht einzuschränken. Wenn jedoch auch Zonen im Chassis des Gefechtsfahrzeugs mit der gekühlten Luft erreicht werden sollen, ermöglichen Gelenkteile im Schlauch die freie Bewegung des Gefechtsturms. Das Gelenkteil ist erfindungsgemäß in der Drehachse des Gefechtsturmes angebracht.

Die Luftzufuhr geschieht durch Mittel zum Lufttransport, wie beispielsweise Ventilatoren. Der Luftfluss an den einzelnen zu kühlenden Zonen kann durch Mittel zur Regelung der Luft an den einzelnen Zonen geschehen. Es ist ebenfalls möglich, in einem zugänglichen Ort im Gefechtsfahrzeug die Gesamtluftzufuhr zu steuern und/oder zu regeln. Es wird hierzu bevorzugterweise ein Steuerpanel im unverzweigten Teil des Schlauchsystems hinter der Kühlanlage in das Kühlsystem eingebracht.

Mittels eines solchen Steuerpanels ist es möglich, die Stärke des Luftstroms im Schlauchsystem zu regulieren sowie die Temperatur der gekühlten Luft. Ebenfalls sind optische und/oder akustische Signalgeber im Steuerpanel integriert, um dem Bediener Möglichkeiten zur optischen und/oder akustischen Einstellung, bzw. Warnungen anzuzeigen.

Die Kühlanlage des Gefechtsfahrzeugs ist in einem gesonderten Raum im Gefechtsturm des Gefechtsfahrzeugs angeordnet. Bevorzugterweise wird vorgeschlagen, die Kühlanlage in einem Ausrüstungsraum vorzusehen. Ausrüstungsräume, also Plätze für Ausrüstungsteile, wie Schlafsäcke, Tarnnetze, etc. sind häufig in Gefechtsfahrzeugen vorhanden und können für den Einbau der Kühlanlage verwendet werden. Dadurch ist das Schaffen gesonderter Kühlräume nicht erforderlich und der Einbau der Kühlanlage geschieht platz- und zeitsparend. Bei einem Leopard-Panzer eignet sich zum Einbau der Kühlanlage beispielsweise der Raum zwischen einer Hecktür und einer Klappe zu einem E-Raum. Für die Luftzufuhr ist es vorteilhaft, wenn ein Zugang zum Raum der Kühlanlage von außerhalb des Gefechtsturmes gewährleistet ist, wie beispielsweise bei dem oben genannten Ausrüstungsraum. Die Ausrüstungsgegenstände selbst können dann an anderer Stelle im Gefechtsfahrzeug verstaut werden.

Das erfindungsgemäße Kühlsystem umfasst mindestens eine Verdichter-Verflüssiger Einheit, mindestens ein Luftbehandlungsgerät sowie ein Schlauchsystem zur Verteilung der gekühlten Luft im Gefechtsfahrzeug. Die Aufnahme eines Wärmestroms der zu kühlenden Luft erfolgt im Luftbehandlungsgerät mit Hilfe eines Kältemittels. Die Verdichter-Verflüssiger Einheit dient zur Kühlung des erwärmten Kältemittels, beispielsweise mit Hilfe von Ventilatoren.

Das Schlauchsystem führt die gekühlte Luft von der Kühlanlage zu den einzelnen Zonen im Gefechtsfahrzeug, welche Kühlung benötigen. Dies sind insbesondere die Räume der Bedienpersonen des Gefechtsfahrzeugs. Es können aber auch weitere Räume im Gefechtsfahrzeug Kühlung benötigen, wie beispielsweise Ausrüstungsräume.

Es wird nun die von der Kühlanlage erzeugte gekühlte Luft auch dazu verwendet, Elektronikeinheiten im Gefechtsfahrzeug, wie beispielsweise eine Antriebselektronik einer Waffenanlage, zu kühlen. Entsprechende Elektronikeinheiten sind oftmals in dafür vorgesehenen Einbauräumen angeordnet, um sie vor äußeren Einflüssen zu schützen.

Vorteilhafterweise kann das vorgeschlagene Kühlsystem also nicht nur zur Kühlung der verschiedenen Zonen im Gefechtsfahrzeug verwendet werden, sondern auch zur Kühlung der Elektronikeinheiten. Dadurch kann der technische Aufwand vermieden werden, für jeden Einbauraum der Elektronikeinheiten eine eigene Kühlung zu konzipieren.

Dem Schlauchsystem, welches die gekühlte Luft im Gefechtsfahrzeug verteilt, wird nunmehr ein zusätzlicher Schlauch hinzugefügt, der die von der Kühlanlage erzeugte gekühlte Luft zusätzlich in den Einbauraum der entsprechenden Elektronikeinheit einbringt.

Hierzu kann ein zusätzlicher Schlauch dem Schlauchsystem hinzugefügt werden. Es kann aber auch durch ein Y-Stück Luft von einem bereits vorhandenen Schlauch abgezweigt werden. Dadurch ist es möglich, beispielsweise die dem Mannschaftsraum zugeführte Luft ebenfalls dazu zu benutzen, die entsprechende Elektronikeinheit zu kühlen.

Das Y-Stück wird in diesem Beispiel vor dem Ende des Schlauchs, welches die von der Kühlanlage gekühlte Luft dem Mannschaftsraum zuführt, eingebracht, um die gekühlte Luft, die zum Mannschaftsraum gelangt, ebenfalls zum Einbauraum der Elektronikeinheit zu leiten. In diesem Falle ist der Wirkungsgrad der Kühlung davon abhängig, wie viel Luft dem Mannschaftsraum bzw. dem Raum von dem die gekühlte Luft abgezweigt wird, durch die Mittel zur Regelung zugeführt wird.

Der zusätzliche Schlauch, welcher die von der Kühlanlage gekühlte Luft dem Einbauraum der entsprechenden Elektronikeinheit zuführt, kann durch eine Bohrung in einer Wand des entsprechenden Einbauraums diesem zugeführt werden oder durch bereits vorhandene Öffnungen, wenn es sich nicht um einen in sich geschlossenen Einbauraum handelt.

In einer bevorzugten Ausführungsform wird der zusätzliche Schlauch unterhalb der zu kühlenden Elektronikeinheit angeordnet und die gekühlte Luft in Richtung der Elektronikeinheit abgegeben. Hierzu kann die Öffnung des Schlauchs in Richtung der Elektronikeinheit zeigen. Der Schlauch kann auch ebenfalls über Öffnungen verfügen, um die gekühlte Luft bereichsweise radial zum Schlauch abgeben zu können.

In einer weiteren bevorzugten Ausführungsform ist der Schlauch im Einbauraum zumindest bereichsweise mit einem luftdurchlässigen Mantel versehen, um über diesen luftdurchlässigen Bereich die Luft an den Einbauraum abzugeben.

Durch die Zuführung der gekühlten Luft entsteht im Einbauraum ein Überdruck. Durch den Abtransport von gekühlter Luft der Kühlanlage entsteht im Raum der Kühlanlage ein entsprechender Unterdruck. Dieser wird nun dazu ausgenutzt, um die warme Luft des Einbauraums der entsprechenden Elektronikeinheit abzuleiten.

Hierzu ist ein Durchbruch vom Einbauraum der entsprechenden Elektronikeinheit zum Raum der Kühlanlage vorgesehen, welcher sich bevorzugterweise oberhalb der zu kühlenden Elektronikeinheit befindet. Dies hat den Vorteil, dass die aufsteigende warme Luft besser abtransportiert werden kann.

Dieser Durchbruch kann dadurch entstehen, dass bei nebeneinanderliegenden Raum der Kühlanlage und Einbauraum lediglich bereichsweise ein Loch in die Wand zwischen den beiden Räumen eingebracht wird.

Bei nicht direkt nebeneinanderliegendem Raum der Kühlanlage und Einbauraum kann der Durchbruch auch durch ein Verbindungsstück der beiden Räume geschaffen werden. Dies kann ebenfalls ein Schlauch sein oder bauliche Mittel des Gefechtsfahrzeugs. Hierzu kann es ebenfalls erforderlich sein, einen weiteren Zugang in Form eines Lochs zum Raum der Kühlanlage zu schaffen.

Durch diese Anordnung entsteht eine Drucckaskade zwischen dem Einbauraum der jeweiligen Elektronikeinheit sowie dem Raum der Kühlanlage. Durch das Zuführen der gekühlten Luft im Einbauraum entsteht in diesem ein Überdruck und durch das Abtransportieren der gekühlten Luft im Raum der Kühlanlage entsteht in diesem ein Unterdruck. Durch die Zuführung der gekühlten Luft durch den Kühlschlauch in den Einbauraum sowie des Durchbruches vom Einbauraum zum Raum der Kühlanlage, wirken beide Drücke auf den Einbauraum und ermöglichen die Druckkaskade.

Die zu kühlenden Elektronikeinheiten in einem Gefechtsfahrzeug können zusätzlich zu Antriebselektroniken einer Waffenanlage auch die Steuerelektroniken eines Gefechtsfahrzeugs umfassen, sowie weitere, im Gefechtsfahrzeug vorhandene Antriebselektroniken. Die beschriebene Antriebselektronik umfasst hierbei Elektronikeinheiten für den Seitenantrieb und/oder den Höhenantrieb eines Gefechtsturms und/oder Waffenanlage des Gefechtsfahrzeugs. Der Seitenantrieb wird hierbei zur Drehung des Gefechtsturms verwendet und der Höhenantrieb zur Elevation des Waffenrohres der Waffe.

Durch ihren Aufbau ist die Druckkaskade auch dazu geeignet, die Antriebselektronik einer elektronischen Waffennachführanlage (EWNA), beispielsweise des Leopard Panzers, zu kühlen.

Weiterhin können die zu kühlenden Elektronikeinheiten ebenfalls Sensoren im Gefechtsfahrzeug umfassen, wie beispielsweise Beschleunigungssensoren, Waffenkreisel, Turmkreisel und/oder Stellungsgeber für die Antriebe.

Zum besseren Wärmeaustausch zwischen den zu kühlenden Elektronikeinheiten und der umgebenen Luft, können die Elektronikeinheiten mit Kühlrippen versehen sein. Für den Transport der gekühlten Luft durch das Schlauchsystem können Ventilatoren benutzt werden und/oder geeignete Düsen.

Weitere Merkmale der vorliegenden Erfindung ergeben sich aus den Zeichnungen.

Es zeigen:
- Figur 1:: Eine perspektivische Darstellung eines Gefechtsfahrzeugs mit Kühlanlage
- Figur 2:: Eine perspektivische Durchsicht eines Gefechtsfahrzeugs mit Kühlsystem
- Figur 3:: Eine seitliche Durchsicht eines Gefechtsfahrzeugs mit Kühlsystem
- Figur 4:: Eine perspektivische Durchsicht eines Gefechtsfahrzeugs mit Kühlsystem und Bedienpersonal
- Figur 5:: Einen Bereich eines Gefechtsturms eines Gefechtsfahrzeugs in schematischer Darstellung mit innenliegenden Teilen sowie
- Figur 6:: Eine zu kühlende Elektronikeinheit in einem entsprechenden Einbauraum.

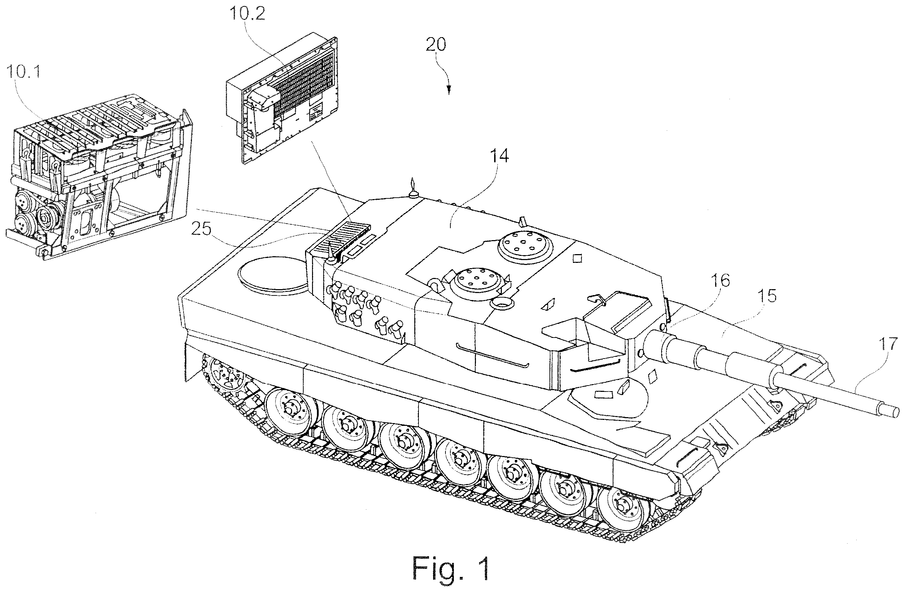

Figur 1 zeigt ein Gefechtsfahrzeug 20, bestehend aus Chassis 15 und mindestens einem Gefechtsturm 14. Der Gefechtsturm umfasst eine Waffenanlage 16 sowie ein Waffenrohr 17. Ebenfalls wird gezeigt, wo eine Kühlanlage 10 für das erfindungsgemäße Kühlsystem bevorzugterweise eingebaut wird. Die Kühlanlage 10 kann jedoch auch in einem anderen Raum 18 im Gefechtsfahrzeug angeordnet sein. In einem Gefechtspanzer 20 sind oftmals Ausrüstungsräume 21 mit Ausrüstungsgegenständen vorhanden. Diese vorhandenen Ausrüstungsräume 21 können für die Kühlanlage 10 umgebaut werden und so als Raum 18 dienen. Die Kühlanlage 10 besteht dabei zumindest aus einer Verdichter-Verflüssiger Einheit 10.1 und einem Luftbehandlungsgerät 10.2.

Die Verdichter-Verflüssiger Einheit 10.1 sorgt für die Kühlung der Luft. Das Luftbehandlungsgerät 10.2 ist für die Reinigung der Luft zuständig. Es können einfache Luftfilter als Luftbehandlungsgerät 10.2 vorgesehen sein, aber auch Luftaufbereitungen für ABC-Einsätze.

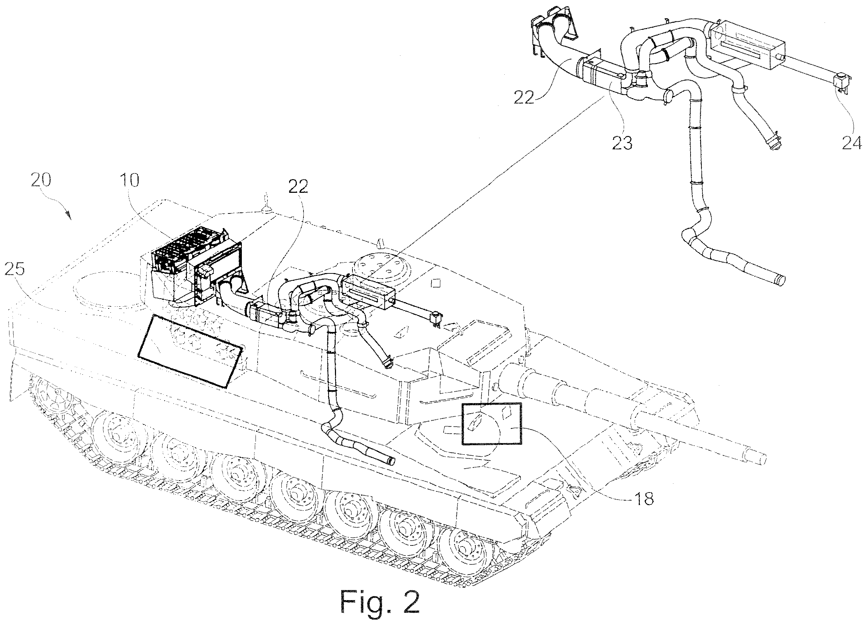

In Figur 2 ist eine bereits eingebaute Kühlanlage 10 in dem Gefechtsfahrzeug 20 zu sehen. Zu einem erfindungsgemäßen Kühlsystem wird an die Kühlanlage 10 ein Schlauchsystem 22 angebracht, welches die von der Kühlanlage 10 geschaffene gekühlte Luft im Gefechtsfahrzeig 20 verteilt. Das Schlauchsystem 22 ist dafür verzweigt, so dass die gekühlte Luft zu mehreren Zonen im Gefechtsfahrzeug 20 gleichzeitig gelangen kann.

Zur Regelung der gekühlten Luft ist ein Steuerpanel 23 vorgesehen, welches die gesamte gekühlte Luft reguliert. Zum Transport der gekühlten Luft können beispielsweise Ventilatoren vorgesehen sein. An den einzelnen Enden des Schlauchsystems 22 können zudem Mittel zur Regelung 24 vorgesehen sein, um an einer einzelnen Zone die Luftzufuhr ebenfalls zu regulieren. Ebenfalls in Figur 2 ist ein alternativer Raum 18 für die Kühlanlage gezeigt.

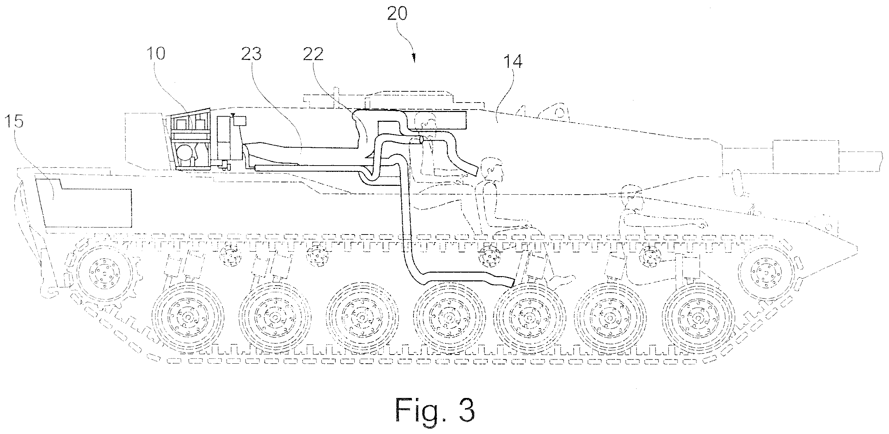

Figur 3 zeigt dazu ein erfindungsgemäßes Kühlsystem, welches in dem Gefechtsfahrzeug 20, bestehend aus Chassis 15 und Gefechtsturm 14, eingebracht ist. Die Kühlanlage 10 ist in einem Raum 18 im Gefechtsturm 14 eingebaut und die gekühlte Luft wird von der Kühlanlage 10 über ein Schlauchsystem 22 verteilt. Zur Regulierung des gesamten Kühlsystems ist ein Steuerpanel 23 vorgesehen.

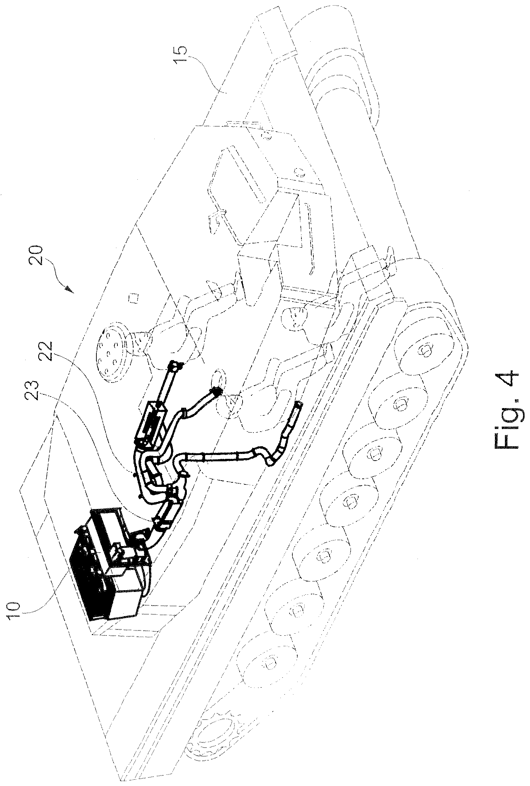

Figur 4 zeigt ebenfalls ein in dem Gefechtsfahrzeug 20 eingebautes Kühlsystem, wobei hier Bedienpersonen eingezeichnet sind, um einige der zu kühlenden Zonen im Gefechtsfahrzeug 20 aufzuzeigen. Die gekühlte Luft der Kühlanlage 10 wird über das Schlauchsystem 22 den einzelnen Zonen im Gefechtsfahrzeug 20 zugeführt. Die Zone des Fahrers des Gefechtsfahrzeuges 20 (MKF) ist hier im unteren Bereich des Turmdrehkranzes angeordnet, da hier die beste Kühlung zu erwarten ist.

Die Regelung der Luft geschieht über ein zentrales Steuerpanel 23, sowie optional über Mittel zur Regelung an den Enden des Schlauchsystems 22. Die gezeigten Zonen für Bedienpersonal sind allesamt im Gefechtsturm 14 angeordnet. Da die Kühlanlage 10 ebenfalls im Gefechtsturm 14 angeordnet ist, wird die Bewegungsfreiheit des Gefechtsturmes 14 nicht eingeschränkt. Sollen auch Zonen im Chassis 15 des Gefechtsfahrzeugs 20 gekühlt werden, wird vorgeschlagen, einen zentral in der Drehachse des Gefechtsturmes 14 angeordneten Schlauch des Schlauchsystems 22 anzuordnen, welcher ggf. über ein Gelenkstück verfügt, damit die Bewegungsfreiheit des Gefechtsturmes nicht eingeschränkt wird.

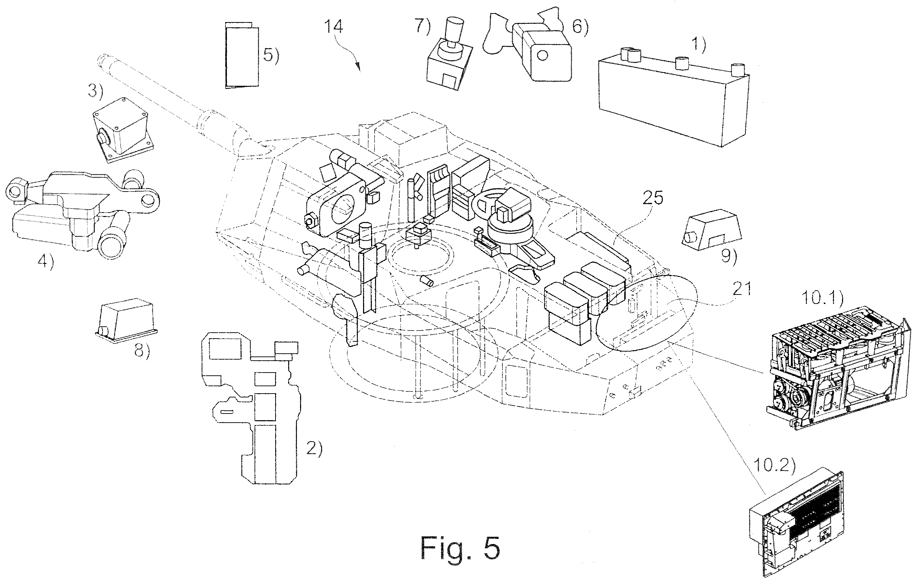

Figur 5 zeigt schematisch einen Bereich des Gefechtsturms 14 des hier nicht näher dargestellten Gefechtsfahrzeugs 20, in dem die Druckkaskade einsetzbar ist. Zu sehen ist eine zu kühlende Antriebselektronik 1, welche in einem dafür vorgesehenen Einbauraum 25 eingebracht ist. Des Weiteren ist der Bereich der Kühlanlage 10, nämlich Verdichter-Verflüssiger-Einheit 10.1 und Luftbehandlungsgerät 10.2 ersichtlich.

Als ebenfalls mögliche zu kühlende Elektronikeinheit sind die Steuerelektronik 5 gezeigt sowie ein Beschleunigungssensor 3, ein Waffenkreisel 8 und ein Turmkreisel 9. Je nach Ausführung dieser einzelnen Elektronikeinheiten 1, 3, 5, 8, 9, müssen diese im Bedarfsfall gekühlt werden so dass eine erfindungsgemäße Druckkaskade auf diese Elektronikeinheiten 1, 3, 5, 8, 9 anwendbar ist. Im weiteren Verlauf der Figurenbeschreibung wird davon ausgegangen, dass zumindest die Antriebselektronik 1 und optional die Steuerelektronik 5 gekühlt werden sollen.

Der gezeigte Gefechtsturm 14 des Gefechtsfahrzeugs 20 wird in einem nicht gezeigten Chassis 15 integriert, wobei das Gefechtsfahrzeug 20 ein Kühlsystem aufweist, welches im Gefechtsturm 14 angeordnet ist. Von der Kühlanlage 10, welche in einem Raum 18 angeordnet ist, wird die gekühlte Luft über ein Schlauchsystem 22 im Gefechtsfahrzeug 20, also im Chassis sowie im Turm, verteilt. Als Raum 18 kann bevorzugterweise der oben beschriebene Ausrüstungsraum 21 fungieren. Erfindungsgemäß wird nun über das Schlauchsystem 22 eine Druckkaskade im Einbauraum 25 der zu kühlenden Elektronikeinheit 1, 5 aufgebaut, um über die gekühlte Luft des Kühlsystems die Elektronikeinheit 1, 5 zu kühlen.

Die in Figur 5 gezeigte zu kühlende Antriebselektronik 1 steuert den Seitenantrieb 2 und den Höhenantrieb 4 der Waffenanlage 16 des Gefechtsfahrzeugs 20. In diesem gezeigten Beispiel dreht der Seitenantrieb 2 den Gefechtsturm 14 und der Höhenantrieb 4 hebt und senkt das Waffenrohr 17 der Waffenanlage 16.

Die optional ebenfalls zu kühlende Steuerelektronik 5 übersetzt dabei die Befehle der Steuereinheit 7 zur Weitergabe an die Antriebselektronik 1. Ebenso ist es möglich durch die Steuerelektronik 5 weitere Steuereinrichtungen 6 anzusteuern.

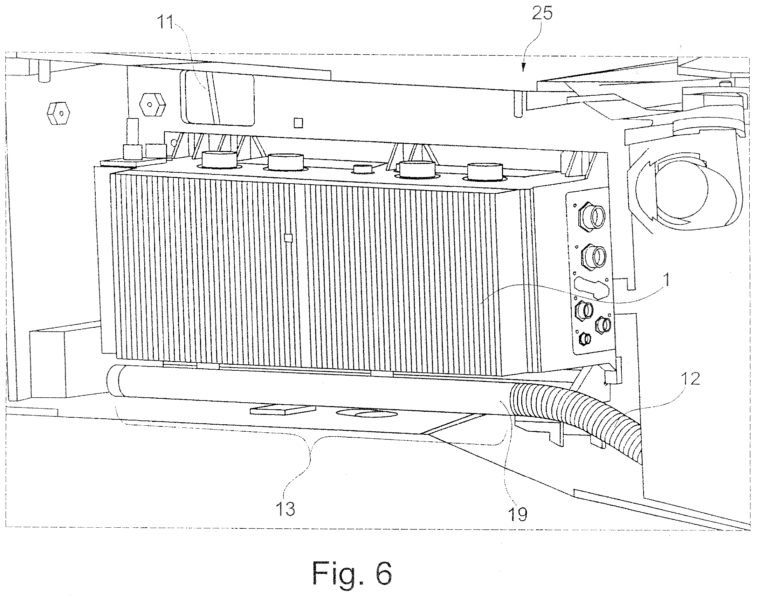

Figur 6 zeigt eine mögliche Realisierung der Druckkaskade in einem Einbauraum 25 der Elektronikeinheit 1, 5 anhand des Beispiels der Antriebselektronik 1 gezeigt.

Zu sehen ist ein Schnitt durch den Einbauraum 25, in dem sich die Antriebselektronik 1 befindet. Diese ist zur besseren Abgabe der entstehenden Wärme durch Kühlrippen ausgestattet. Vom vorhandenen Schlauchsystem 22 des Kühlsystems wird mindestens ein Schlauch 12 in den Einbauraum 25 eingeführt und im vorliegenden Falle unterhalb der Antriebselektronik 1 angeordnet.

Der Schlauch 12 weist Öffnungen 13 auf über die die Luft in den Einbauraum 25 abgegeben werden kann. Diese Öffnungen 13 können Löcher im Schlauch 12 darstellen und zwar am Ende des Schlauchs 12 sowie auch radial im Mantel 19 des Schlauches angeordnet. Der Mantel 19 des Schlauchs 12 kann aber auch, wie dargestellt, bereichsweise luftdurchlässig gestaltet sein.

In allen Fällen wird durch den Schlauch 12 Luft der Kühlanlage 10 dem Einbauraum 25 und somit auch der zu kühlenden Antriebselektronik 1 zugeführt. Dadurch entsteht im Einbauraum 25 ein Überdruck.

Des Weiteren ist im Einbauraum 25 der zu kühlenden Antriebselektronik 1 ein Durchbruch 11 vorgesehen, der den Einbauraum 25 mit dem Raum 18 der Kühlanlage 10 verbindet. Dieser Durchbruch 11 kann als ein einfaches Loch in der Wand ausgeführt sein, wenn der Raum 18 der Kühlanlage 10 direkt neben dem Einbauraum 25 angeordnet ist. Ansonsten wird ein Verbindungsschlauch oder andere bauliche Mittel des Gefechtsfahrzeugs verwendet, um den Einbauraum 25 mit dem Raum 18 der Kühlanlage 10 zu verbinden.

Da die Luft im Raum der Kühlanlage 10 gekühlt und danach durch das Schlauchsystem 22 abtransportiert wird, herrscht im Raum der Kühlanlage 10 ein Unterdruck. Durch den Durchbruch 11 wirkt dieser Unterdruck auch auf den Einbauraum 25. Dadurch, dass die zugeführte, gekühlte Luft im Einbauraum 25 einen Überdruck erzeugt und der Durchbruch einen Unterdruck, wird die zugeführte gekühlte Luft an der zu kühlenden Antriebselektronik 1 vorbeigeleitet und über den Durchbruch 11 wieder abgeführt.

Wichtig bei dieser Druckkaskadenanordnung ist, dass die zugeführte Luft beim Weg zum Durchbruch an der zu kühlenden Antriebselektronik 1 vorbeigeführt wird, um dessen Wärme ableiten zu können.

Durch diesen Aufbau ist eine Druckkaskade gegeben, die ohne großen technischen Aufwand mit den vorhandenen Mitteln eines Gefechtsfahrzeugs eine Kühlung der zu kühlenden Elektronikelemente bereitstellt.

Die Erfindung ist nicht auf die in der Beschreibung genannten Merkmale beschränkt. Vielmehr sind weitere Ausgestaltungsmöglichkeiten denkbar. So könnten mehrere Kühlanlagen und Kühlräume in Gefechtsfahrzeugen vorhanden sein. Ebenso wäre eine Steuerelektronik denkbar, die eine Mindestluftzufuhr im Einbauraum regelt sowie entsprechende Sensoren, die feststellen, welche Temperatur im Einbauraum herrscht, um dann die Luftzufuhr entsprechend regeln zu können.

### Bezugszeichenliste

- 1: Antriebselektronik
- 2: Seitenantrieb
- 3: Beschleunigungssensor
- 4: Höhenantrieb
- 5: Steuerelektronik
- 6: Steuereinrichtung
- 7: Steuereinheit
- 8: Waffenkreisel
- 9: Turmkreisel
- 10: Kühlanlage
- 10.1: Verdichter-Verflüssiger Einheit
- 10.2: Luftbehandlungsgerät
- 11: Durchbruch
- 12: Kühlschlauch
- 13: Öffnungen in 12
- 14: Gefechtsturm
- 15: Chassis
- 16: Waffenanlage
- 17: Waffenrohr
- 18: Raum
- 19: Mantel
- 20: Gefechtsfahrzeug
- 21: Ausrüstungsraum
- 22: Schlauchsystem
- 23: Steuerpanel
- 24: Mittel zur Regelung
- 25: Einbauraum

## Patentansprüche

1. Gefechtsfahrzeug (20), mit einem Kühlsystem zur Kühlung verschiedener Zonen in dem Gefechtsfahrzeug (20),
wobei das Gefechtsfahrzeug (20) aus einem Chassis (15) und mindestens einem drehbaren Gefechtsturm (14) aufgebaut ist und
einen Raum (18) im Gefechtsturm (14) aufweist, wobei mindestens eine Kühlanlage (10) in dem Raum (18) eingebracht ist, und die Kühlanlage (10) mindestens eine Verdichter-Verflüssiger Einheit (10.1) und mindestens ein Luftbehandlungsgerät (10.2) umfasst,
**dadurch gekennzeichnet,**
**dass** ein Schlauchsystem (22) die von der Kühlanlage (10) gekühlte Luft zu den Zonen im Gefechtsturm und im Chassis des Gefechtsfahrzeug leitet, wobei das Schlauchsystem (22) aus mehreren verzweigten Schläuchen besteht,
**dass** die Kühlanlage (10) einen Luftstrom erzeugt, welcher durch das Schlauchsystem (22) zu den Zonen geleitet wird,
**dass** über Gelenkteile in einem Schlauch der mehreren verzweigten Schläuche, die in einer Drehachse des Gefechtsturms (14) angebracht sind, die Zonen im Chassis erreicht werden
und **dass** der Raum (18), in dem die Kühlanlage angeordnet ist, ein Ausrüstungsraum (21) ist und von außerhalb des Gefechtsturms zugänglich ist.

2. Gefechtsfahrzeug (20) nach Anspruch 1, **dadurch gekennzeichnet, dass** das Luftbehandlungsgerät (10.2) so gestaltet ist, dass es auch ABC-kontaminierte Luft atembar aufbereitet, also kontaminierte Luft aufgrund von atomaren, biologischen und/oder chemischen Bedrohungen.

3. Gefechtsfahrzeug (20) nach einem der Ansprüche 1 oder 2, **dadurch gekennzeichnet, dass** die Zonen im Gefechtsfahrzeug (20) Räume des Bedienpersonals oder Einbauräume (25) von Elektronikeinheiten umfassen.

4. Gefechtsfahrzeug (20) nach einem der Ansprüche 1 bis 3, **dadurch gekennzeichnet, dass** ein Steuerpanel (23) vorgesehen ist, über welches der Luftstrom und/oder die Temperatur des Luftstromes im Schlauchsystem (22) geregelt werden kann.

5. Gefechtsfahrzeug (20) nach Anspruch 4, **dadurch gekennzeichnet, dass** das Steuerpanel (23) Mittel zur Regelung des Luftstroms aufweist sowie optische und/oder akustische Anzeigen.

6. Gefechtsfahrzeug (20) nach einem der Ansprüche 1 bis 5, **dadurch gekennzeichnet, dass** die Schlauchenden des Schlauchsystems (22) ebenfalls Mittel zur Regelung (24) des Luftstroms aufweisen.

## Claims

1. Combat vehicle (20), having a cooling system for cooling various zones in the combat vehicle (20),
wherein the combat vehicle (20) is constructed from a chassis (15) and at least one rotatable combat turret (14) and
has a compartment (18) in the combat turret (14), wherein at least one cooling plant (10) is introduced into the compartment (18), and the cooling plant (10) comprises at least one compressor and liquefier unit (10.1) and at least one air treatment apparatus (10.2),
**characterized in that**
a hose system (22) conducts the air cooled by the cooling plant (10) to the zones in the combat turret and in the chassis of the combat vehicle, wherein the hose system (22) consists of a plurality of branched hoses,
**in that** the cooling plant (10) produces an air flow which is conducted through the hose system (22) to the zones,
**in that** zones in the chassis are reached via joint parts in a hose of the plurality of branched hoses, which are arranged in an axis of rotation of the combat turret (14)
and **in that** the compartment (18) in which the cooling plant is arranged is an equipment compartment (21) and is accessible from outside the combat turret.

2. Combat vehicle (20) according to Claim 1, **characterized in that** the air treatment apparatus (10.2) is configured in such a manner that it processes even ABC contaminated air so as to be breathable, i.e. air contaminated due to atomic, biological and/or chemical threat.

3. Combat vehicle (20) according to either of Claims 1 and 2, **characterized in that** the zones in the combat vehicle (20) comprise installation compartments (25) of electronic units.

4. Combat vehicle (20) according to one of Claims 1 to 3, **characterized in that** a control panel (23) is provided via which the air flow and/or the temperature of the air flow in the hose system (22) can be regulated.

5. Combat vehicle (20) according to Claim 4, **characterized in that** the control panel (23) has means for regulating the air flow, and also optical and/or acoustic indicators.

6. Combat vehicle (20) according to one of Claims 1 to 5, **characterized in that** the hose ends of the hose system (22) likewise have means for regulating (24) the air flow.

## Revendications

1. Véhicule de combat (20), comprenant un système de refroidissement destiné à refroidir différentes zones dans le véhicule de combat (20),
le véhicule de combat (20) étant constitué d'un châssis (15) et d'au moins une tourelle de combat (l4) et
possédant un espace (18) dans la tourelle de combat (14), au moins un équipement de refroidissement (10) étant incorporé dans l'espace (18) et l'équipement de refroidissement (10) comportant au moins une unité compresseur-condenseur (10.1) et au moins un appareil de traitement de l'air (10.2),
**caractérisé en ce**
**qu'**un réseau de tuyaux (22) dirige l'air refroidi par l'équipement de refroidissement (10) vers les zones dans la tourelle de combat et dans le châssis du véhicule de combat, le réseau de tuyaux (22) se composant de plusieurs tuyaux ramifiés,
**que** l'équipement de refroidissement (10) génère un courant d'air, lequel est dirigé vers les zones par le réseau de tuyaux (22),
**que** les zones du châssis sont atteintes via des pièces de jonction dans un tuyau parmi la pluralité de tuyaux ramifiés, qui sont disposés dans un axe de rotation de la tourelle de combat (14).
et **que** l'espace (18) dans lequel est disposé l'équipement de refroidissement est un espace d'équipement (21) et est accessible depuis l'extérieur de la tourelle de combat.

2. Véhicule de combat (20) selon la revendication l, **caractérisé en ce que** l'appareil de traitement de l'air (10.2) est configuré de telle sorte qu'il conditionne également de l'air contaminé NBC pour le rendre respirable, c'est-à-dire de l'air contaminé en raison de menaces nucléaires, biologiques et/ou chimiques.

3. Véhicule de combat (20) selon l'une des revendications l ou 2, **caractérisé en ce que** les zones dans le véhicule de combat (20) comprennent les espaces du personnel operateur ou des espaces d'installation (25) d'unités électroniques.

4. Véhicule de combat (20) selon l'une des revendications l à 3, **caractérisé en ce qu'**un panneau de commande (23) est présent, par le biais duquel peut être régulé le courant d'air et/ou la température du courant d'air dans le réseau de tuyaux (22).

5. Véhicule de combat (20) selon la revendication 4, **caractérisé en ce qu'**un panneau de commande (23) possède des moyens de régulation du courant d'air ainsi que des indicateurs visuels et/ou sonores.

6. Véhicule de combat (20) selon l'une des revendications l à 5, **caractérisé en ce que** les extrémités de tuyau du réseau de tuyaux (22) possèdent également des moyens servants à la régulation (24) du courant d'air.
